# EUROPEAN PATENT APPLICATION

(11) **EP 1 215 491 A1**
(43) Date of publication of application: **19.06.2002**
(21) Application number: 01204820.3
(22) Date of filing: 10.12.2001
(51) Int. Cl.: G01N 27/407, G01N 27/12

(54) **Gas sensor with a heater**

(30) Priority: 15.12.2000 US 738017
(71) Applicant: Delphi Technologies, Inc., Troy, MI 48007 (US)
(72) Inventor: Chen, David Kwo-Shyong, Rochester Hills, MI 48309 (US); McCauley, Kathryn Mary, Durand, MI 48429 (US)
(74) Representative: Denton, Michael John

(57) **Abstract**

A gas sensor (210) includes a heater (222) having a connection portion (270) that has a characteristic cross sectional geometry, a heating portion (272) that has a characteristic cross sectional geometry, and a transition portion (274) disposed intermediate the connection (270) and heating portions (272). The transition portion (274) has a cross sectional geometry that is variable along a length thereof to effectuate a smooth transition between the connection portion (270) and the heating portion (272). Typically, the cross sectional geometry of the connection portion (270) is substantially rectangular in shape, while the cross sectional geometry of the heating portion (272) is substantially round. A method of manufacturing the heater (222) having varying cross sectional geometries includes shaping a core material to have a substantially rectangular cross sectional geometry on a first end (228) thereof, shaping the core material to have a substantially round cross sectional geometry on an opposing end (229) thereof, and shaping the core material intermediate the opposing ends (228,229) to effectuate a smooth transition between the portion having the substantially rectangular cross sectional geometry and the portion having the substantially round cross sectional geometry.

## Description

### TECHNICAL FIELD

This disclosure relates generally to gas sensors, and, more particularly, to a heater for a gas sensor in which the cross sectional geometry of the heating element changes from round to rectangular.

### BACKGROUND

Gas sensors are used in automotive vehicles to detect the presence of constituents in exhaust gases (e.g., oxygen, hydrocarbons, nitrous oxides) and to sense when an exhaust gas content switches from a rich-to-lean condition or from a lean-to-rich condition. A typical gas sensor includes a conical sensor element that is heated by a heater element from within the conical portion of the sensor itself. The heater element is usually formed of ceramic materials such as alumina.

The proper functioning of the typical gas sensor is dependent upon its temperature and the temperature of the system into which it is incorporated. Because a significant amount of time is often required for the gas sensor to become active after startup of the engine, it is difficult to detect the gas constituents during this time. When the gas constituents are difficult to detect, the air/fuel ratio is difficult to control. If the temperature is not high enough, even though the gases are detected, the quantification of the individual constituents may be less than accurate.

The typical gas sensor utilizes a sensor element (which is generally conical in structure) to sense particular constituents of an exhaust gas. The architecture of the sensor element provides obstacles to the efficient heating of the sensor element due to the sensor element and the heating element being separated from each other. One manner of heating the sensor element includes a planar heater to bring the sensor up to a temperature at which the constituents can be detected and quantified. Such a heater element, when disposed within the conical portion of the sensor element, effectuates the transfer of heat from the heater element to an inner surface of the conical portion of the sensor element. Because of the lack of continuity between the heater element and the inner surface of the conical portion of the sensor element, the efficiency of the heat transfer therebetween is generally less than optimum. Although such a planar heater is typically mounted within the conical sensor element using a simple mechanism (which thereby results in the use of the planar heater being cost effective), the less than optimum efficiency may cause a slower light off to be realized by the exhaust constituent sensor. Furthermore, due to such a less than optimum efficiency, an increased amount of power may be required to operate the sensor.

Another manner of heating the conical sensor element is through the use of a heater element that is rod-like in structure. Such a heater typically incorporates a thick film heater pattern printed on the rod. The rod substantially corresponds to the shape and contours of the inner surface of the conical portion of the sensor element. Such a structural configuration is generally more efficient with regard to the transfer of heat between the heater element and the conical sensor element due to the closely positioned surfaces therebetween. More efficient heat transfer generally yields a faster light off and a lower operating power requirement than a heater element that is planar in structure. However, the connectors of the rod heater typically require the connection thereof to the body portion of the rod heater to be by a brazing procedure or by mechanical attachment utilizing a complex mechanism, both of which can be expensive relative to the cost of the finished gas sensor.

### SUMMARY

A gas sensor having a round to rectangular cross sectional transition and a method of manufacture therefor is described below. The gas sensor includes a heater having a connection portion, a heating portion, and a transition portion disposed intermediate the connection and heating portions. The connection portion and the heating portion each have characteristic cross sectional geometries associated therewith. The transition portion has a cross sectional geometry that is variable along a length thereof to effectuate a smooth transition between the connection portion and the heating portion. Typically, the cross sectional geometry of the connection portion is substantially rectangular in shape, while the cross sectional geometry of the heating portion is substantially round. By configuring each section in such a manner, the substantially rectangular-shaped cross sectional geometry can more effectively receive an electrical connection and the round cross sectional geometry can more intimately engage an inner surface of a sensor element, thereby more effectively transferring heat from the heating portion to the sensor element.

A method of manufacturing the heater having varying cross sectional geometries includes shaping a core material to have a substantially rectangular cross sectional geometry on a first end thereof, shaping the core material to have a substantially round cross sectional geometry on an opposing end thereof, and shaping the core material intermediate the opposing ends to effectuate a smooth transition between the portion having the substantially rectangular cross sectional geometry and the portion having the substantially round cross sectional geometry. The method may further include prefiring the shaped core material to provide the core material with sufficient structural strength for subsequent processing.

In the above described gas sensor, the gradual transitions between each section of the heater element from the substantially round cross section to the substantially rectangular cross section eliminate stresses that would be present at the junctures of a heater element having a planar section directly attached to a rod-like section. The elimination of such stresses improves the structural integrity of such a heater element.

### BRIEF DESCRIPTION OF THE DRAWINGS

FIGURES 1 and 2 are a cross sectional views of gas sensors of the prior art.
FIGURE 3 is a cross sectional view of a gas sensor having a heater having a variable cross sectional geometry over a length thereof.
FIGURE 4 is an elevation view of a heater having a variable cross sectional geometry over a length thereof.

### DETAILED DESCRIPTION

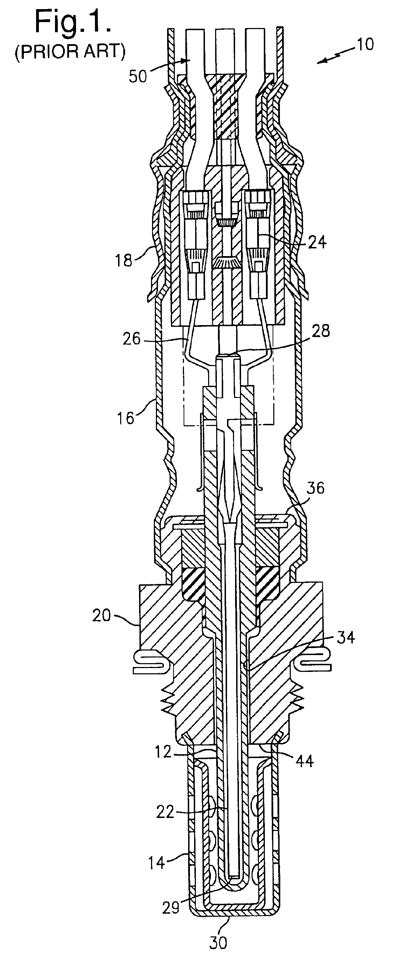

Referring FIGURE 1, a gas sensor of the prior art is generally indicated at 10 and is hereinafter referred to as "sensor 10". Sensor 10 includes a conical sensor element 12 disposed within a housing structure. The housing structure is typically formed of a lower shield 14, an upper shield 16, an outer shield 18, and a shell 20. Shell 20 couples upper shield 16 to lower shield 14 such that the connection between upper shield 16 and lower shield 14 is watertight.

Sensor 10 includes a heater assembly for heating conical sensor element 12. The heater assembly includes a heater 22, wire crimps 24, and electrical heater wires 26. Electrical heater wires 26, as shown, are brazed onto heater 22. Heater 22, which is cylindrical in configuration, includes a first end 28 and an opposing second end 29 and is disposed within conical sensor element 12. Conical sensor element 12 extends through a bore 34 formed within shell 20 such that one end of conical sensor element 12 extends beyond a first end 36 of shell 20 and within upper shield 16 and an opposing end of conical sensor element 12 extends beyond a second end 44 of shell 20 and within lower shield 14. Heater 22 is positioned within conical sensor element 12 such that first end 28 of heater 22 is positioned within upper shield 16 and second end 29 of heater 22 is positioned proximate a sensing end 30 of sensor 10. Power is provided to heater 22 from a motor vehicle charging system or battery (not shown) through electrical heater wires 26 of a wiring harness, shown generally at 50.

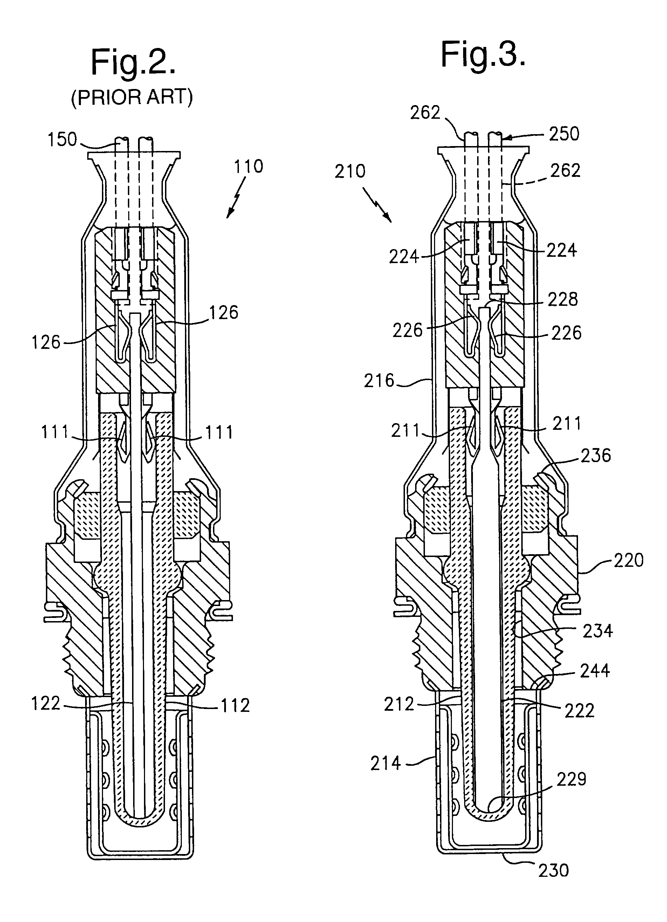

Referring now to FIGURE 2, a gas sensor of the prior art is shown generally at 110 and is referred to hereinafter as "sensor 110". Sensor 110 is substantially similar in construction to sensor 10 as shown in FIGURE 1 and includes a conical sensor element 112 disposed within a housing structure. Sensor 110, however, includes a heater 122 that is substantially planar (as opposed to cylindrical) in configuration. Electrical communication is maintained between heater 122 and a wiring harness 150 through at least two flexibly configured electrical heater wires 126. Heater 122 is retained within conical sensor element 112 with the aid of at least two "grasshoppers 111". Each grasshopper 111 is a piece of wire or thin metal bent to form a retaining member. The bent part of each wire or thin metal imparts a resiliency to grasshopper 111 such that the placement of grasshoppers 111 between flat outer surfaces of heater 122 and an inner surface of conical sensor element 112 causes heater 122 to be flexibly retained within conical sensor element 112.

Referring now to FIGURE 3, a gas sensor incorporating a heater having a round-to-rectangular cross sectional transition is shown generally at 210 and is referred to hereinafter as "sensor 210". Sensor 210 is substantially similar in construction to sensor 110 as shown in FIGURE 2 and includes a conical sensor element 212 disposed within a housing structure. The housing structure is formed of a lower shield 214, an upper shield 216, and a shell 220. Shell 220 couples upper shield 216 to lower shield 214 such that the connection between upper shield 216 and lower shield 214 is watertight.

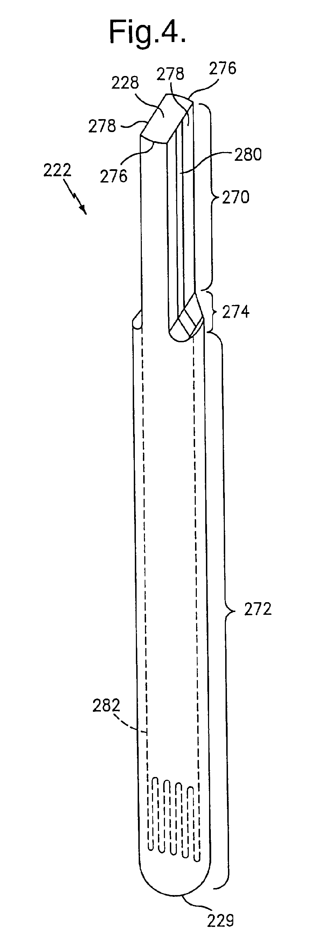

Sensor 210 includes a heater assembly for heating conical sensor element 212. The heater assembly includes a heater 222, wire crimps 224, and electrical heater wires 226. Heater 222, which is shown in greater detail below with reference to FIGURE 4, includes a first end 228 and an opposing second end 229 and is disposed within conical sensor element 212. Conical sensor element 212 extends through a bore 234 formed within shell 220 such that one end of conical sensor element 212 extends beyond a first end 236 of shell 220 and within upper shield 216 and an opposing end of conical sensor element 212 extends beyond a second end 244 of shell 220 and within lower shield 214. Heater 222 is positioned within conical sensor element 212 such that first end 228 of heater 222 is positioned within upper shield 216 and second end 229 of heater 222 is positioned proximate a sensing end 230 of sensor 210. Grasshoppers 211 are used to flexibly retain heater 222 within conical sensor element 212.

In the heater assembly of sensor 210, power is provided to heater 222 through electrical heater wires 226. Each electrical heater wire 226 is electrically connected to a wiring harness, shown generally at 250, by wire crimp 224. The heater assembly is powered by a vehicle charging system or battery (not shown) through wire harness 250 and heater wires 226. It should be understood that a single wire crimp 224 is used for each heater wire 226 and a corresponding heater power cable 262. In sensor 210, wire harness 250 includes four electrical cables, two of which are shown. Two of the cables are sensor signal cables (not shown), and the other two of the cables are heater power cables 262.

Referring now to FIGURE 4, heater 222 is shown generally and in greater detail. Heater 222 typically comprises a shaped alumina core. The core may be shaped through the use of a die press (not shown). Once manufactured, the alumina core is typically prefired in order to provide the alumina with sufficient structural strength for subsequent processing. The alumina core of heater 222 includes a connection portion, shown generally at 270 and corresponding with first end 228 of heater 222, a heating portion, shown generally at 272 and positioned proximate second end 229 of heater 222, and a transition portion, shown generally at 274, disposed intermediate both heating portion 272 and connection portion 270. The configurations and dimensions of heater 222 are such that heater 222 is receivable within the conical sensor element.

Connection portion 270 is configured and dimensioned such that first end 228 of heater 222 is physically and electrically connected to the heater wires. Connection portion 270 comprises one end of the alumina core and may be substantially rectangular in cross sectional shape having arcuately defined opposing sides 276 and planar opposing sides 278. A radius of curvature of arcuately defined opposing sides 276 typically corresponds with a radius of curvature of an inner surface of the conical sensor element in order to facilitate the secure retention of heater 222 within the conical sensor element.

Conductor pads 280 extend over planar opposing sides 278 of connection portion 270, into transition portion 274, and partly into heating portion 272. Each conductor pad 280 typically comprises an electrically conductive material that is deposited onto the outer surface of heater 222 using thick film deposition techniques. Such thick film deposition techniques include, but are not limited to, screen printing and stenciling. Conductor pads 280 are fabricated from an organic ink that contains a noble metal powder and a ceramic powder suspended in an organic binder to form a paste. Noble metals that can be utilized for the paste include, but are not limited to, platinum, palladium, gold, rhodium, and blends of the foregoing.

Transition portion 274 is disposed intermediate connection portion 270 and heating portion 272 and is formed during the shaping of the alumina core to provide for a smooth transition from the rectangular cross section of connection portion 270 to the rounded cross section of heating portion 272. The smooth transition is effectuated by the gradual enlarging of the cross sectional area of connection portion 270 and the gradual change in shape of the cross section over a length of transition portion 274 from connection portion 270 to heating portion 272.

Heating portion 272 is a rod-shaped portion of the alumina core having a substantially round cross sectional shape and being disposed on second end 229 of heater 222. Heating portion 272 comprises a heater element 282 disposed betwee the alumina core and an alumina skin. If the conical sensor element is tapered toward a terminus thereof that corresponds with the sensing end of the sensor, heating portion 272 may also be tapered to allow for an accurate fit therewith. The outer surface of heating portion 272 may be in light frictional contact with an inner surface of the conical sensor element, thereby eliminating any space between heater 222 and the conical sensor element and allowing for heat to be transferred from heater 222 to the conical sensor element conductively.

Heater element 282 comprises a resistive and electrically conductive material disposed on a substrate, which may be an alumina tape, disposed on heating portion 272. Heater element 282 is typically fabricated from an organic ink that includes a conductor in the form of a powdered metal and a powdered ceramic suspended in an organic binder to form a paste. Typical powdered metals include, but are not limited to, tungsten, platinum, palladium, and blends of the foregoing. The paste is deposited onto the alumina tape using thick film deposition techniques that include, but are not limited to, screen printing and stenciling. The alumina tape is wrapped around the section of heating portion 272 having the round cross sectional shape such that electrical communication is maintained between heater element 282 and conductor pads 280. Generally, heater element 282 is arranged to define a serpentine pattern in order to enable heat to be evenly distributed over the outer surface proximate second end 229 of heating portion 272. Heater element 282 may also be configured such that heat is distributed to selective locations over the surface of the alumina tape. Once the heater pattern is disposed on the alumina tape, the alumina tape is wrapped around the alumina core to form heater element 282.

The disposing of the alumina skin over the alumina core may be effectuated by wrapping an alumina tape therearound. When the alumina skin is properly positioned on the alumina core, heater 222 is placed into a kiln (not shown) and sintered. Sintering of heater 222 imparts the desired strength and performance characteristics thereto.

While preferred embodiments have been shown and described, various modifications and substitutions may be made thereto without departing from the spirit and scope of the invention. Accordingly, it is to be understood that the present invention has been described by way of illustration only, and such illustrations and embodiments as have been disclosed herein are not to be construed as limiting to the claims.

## Claims

1. A heater assembly for a gas sensor (210), comprising:
a heater (222) having a cross sectional geometry that is variable along a length thereof, various points of said cross sectional geometry being configured to facilitate an electrical connection to said heater (222) and to facilitate heat transfer from said heater (222); and
a wiring harness (250) disposed in electrical communication with said heater (222).

2. The heater assembly of claim 1 wherein said cross sectional geometry varies from a substantially rectangular cross sectional geometry to a substantially round cross sectional geometry.

3. The heater assembly of claim 2 wherein said substantially rectangular cross sectional geometry is configured to electrically engage said wiring harness (250).

4. The heater assembly of claim 2 wherein said round cross sectional geometry is configured and dimensioned to allow said substantially round cross sectional geometry to be intimately received in a conical sensor element (212).

5. The heater assembly of claim 1 wherein said electrical communication between said heater (222) and said wiring harness (250) is maintained through at least one wire crimp (224).

6. A heater (222) for a gas sensor (210), comprising:
a connection portion (270) having a characteristic cross sectional geometry;
a heating portion (272) having a characteristic cross sectional geometry; and
a transition portion (274) disposed intermediate and in mechanical communication with said connection portion (270) and with said heating portion (272), said transition portion (274) having a cross sectional geometry that is variable along a length thereof.

7. The heater (222) of claim 6 wherein said cross sectional geometry of said transition portion (274) at a point at which said connection portion (270) is disposed on said transition portion (274) is substantially similar to said characteristic cross sectional geometry of said connection portion (270) and wherein said cross sectional geometry of said transition portion (274) at a point at which said heating portion (272) is disposed on said transition portion (274) is substantially similar to said characteristic cross sectional geometry of said heating portion (272).

8. The heater (222) of claim 7 wherein said characteristic cross sectional geometry of said connection portion (270) is substantially rectangular, wherein said characteristic cross sectional geometry of said heating portion (272) is substantially round, and wherein said cross sectional geometry of said transition portion (274) varies from substantially rectangular at said point at which said connection portion (270) is disposed on said transition portion (274) to substantially round at said point at which said heating portion (272) is disposed on said transition portion (274).

9. The heater (222) of claim 6 wherein said variable cross sectional geometry of said transition portion (274) is defined during the shaping of a core of said heater (222).

10. The heater (222) of claim 6 wherein said connection portion (270) is in electrical communication with a wiring harness (250) electrically configured to receive a power input.

11. The heater (222) of claim 10 wherein said electrical communication with said wiring harness (250) is effectuated through the use of wire crimps (224).

12. The heater (222) of claim 6 wherein said connection portion (270) includes at least one conductor (280) disposed thereon for effectuating electrical communication between a power source and said heating portion (272).

13. The heater (222) of claim 12 wherein said at least one conductor (280) is a blended paste comprising a metallic powder and a ceramic powder suspended in an organic binder.

14. The heater (222) of claim 6 wherein said heating portion (272) includes a heater element (282) disposed thereon, said heater element (282) being in electrical communication with a power source through said conductor (280) portion.

15. The heater (222) of claim 14 wherein said heater element (282) is a blended paste comprising a metallic powder and a ceramic powder suspended in an organic binder.

16. The heater (222) of claim 6 wherein said heater (222) is tapered along said heating portion (272) toward a terminus of said heater (222).

17. The heater (222) of claim 6 wherein said heater (222) is fabricated from alumina.

18. A method of manufacturing a heater (222) for a gas sensor (210), comprising:
configuring a core material to have a variable cross sectional geometry such that an electrical connection to said heater (222) can be facilitated and such that heat transfer from said heater (222) can be facilitated;
disposing a heater element (282) on a portion of said core material; and
operably connecting said heater element (282) to an electrical source.

19. The method of claim 18 wherein said configuring of said core material comprises,
shaping said core material such that a first end (228) thereof defines a substantially rectangular cross sectional geometry,
shaping said core material such that a second end (229) thereof defines a substantially round cross sectional geometry, and
shaping said core material such that a portion of said core material intermediate said first end (228) and said second end (229) defines a smooth transition between said substantially rectangular cross sectional geometry and said substantially round cross sectional geometry.

20. The method of claim 19 wherein said configuring of said core material further comprises prefiring of said shaped core material.

21. The method of claim 18 wherein said disposing of said heater element (282) on said core material comprises,
disposing a resistive and electrically conductive material onto a tape, and
disposing said tape onto said core material.

22. The method of claim 21 wherein said disposing of said resistive and electrically conductive material onto said tape comprises screen printing said resistive and electrically conductive material onto said tape.

23. The method of claim 18 further comprising disposing a skin over said heater element (282).
